# EUROPEAN PATENT SPECIFICATION

(11) **EP 2 930 711 B1**
(45) Date of publication and mention of the grant of the patent: **07.03.2018**
(21) Application number: 14164221.5
(22) Date of filing: 10.04.2014
(51) Int. Cl.: H04N 9/68

(54) **System for optimizing image quality**
System zur Optimierung der Bildqualität
Système d'optimisation de la qualité d'image

(43) Date of publication of application: 14.10.2015
(73) Proprietor: Televic Rail NV, 8870 Izegem (BE)
(72) Inventor: Van Doorselaer, Geert, 8310 Assebroek (BE); Van den Wouwer, Dirk, 9120 Melsele (BE)
(74) Representative: Van Bladel, Marc

(56) References cited:
- WO-A1-2012/153290
- WO-A1-2014/042100
- US-A1- 2003 001 856
- US-A1- 2008 195 977
- US-A1- 2010 123 802
- US-A1- 2012 206 479

## Description

### Field of the invention

The present invention is generally related to the field of passenger information systems as used in transportation vehicles, airports, railway stations and the like.

### Background of the invention

In the field of passenger information systems more and more high resolution displays are being installed on board of trains, trams and light rail vehicles. They are replacing lower resolution matrix displays, e.g. LED displays. This trend is facilitated by the increased robustness of these high resolution displays. In addition, these visualization devices are now available in different sizes. This eases the integration in the passenger area of rail vehicles. A further enabler for this tendency is the fact that embedded processors have become much more powerful and that they are now capable of driving these high resolution output devices.

The main advantage of these high resolution displays (implemented as e.g. plasma or TFT screens) is their capability of communicating more information in an accessible way to passengers compared to other, older communication means.

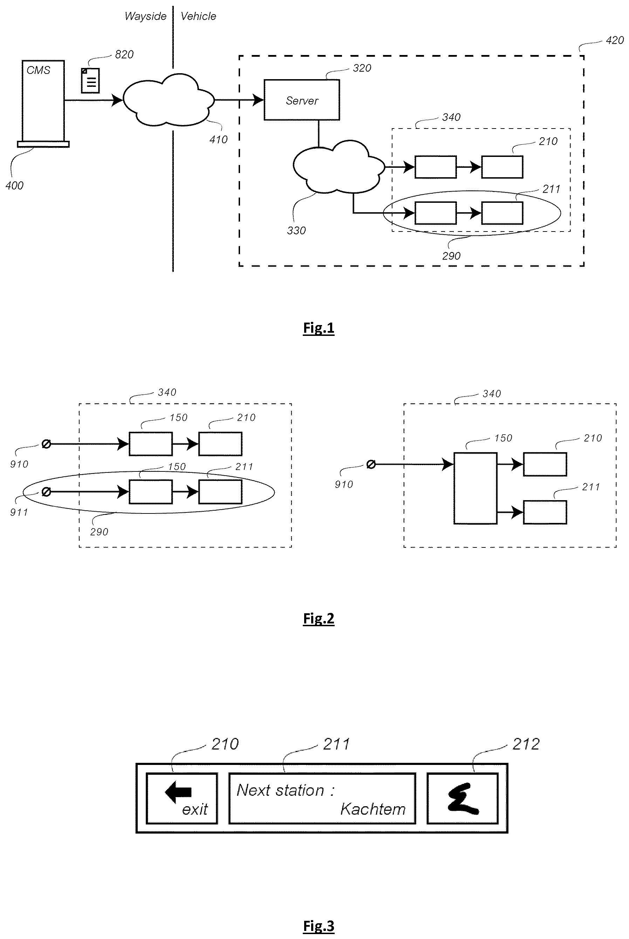

The basic set-up of such a passenger information system is depicted in Fig.1. The left side represents one or more systems (400) handling the content to be shown on the visualisation panels on board the vehicle (420). These systems are referred to as Passenger Information Fleetmanagers, Content Management Systems or (Real Time) Data Servers. These systems output data (820) which will be brought on board the vehicles by means of some medium (410). The transfer can for example be achieved by wireless communication data transfer or by physically bringing the data on board the train (e.g. by using a memory storage device). The network (330) on board the vehicle (420) enables communication between one or more servers (320) and one or more screens (290).

The screen (290) comprises a network interface (911), a render engine (150) and a video panel (211) (see Fig.2 left hand side) visualizing the data (820) which was prepared off board. In a particular implementation the rendering engine can drive multiple panels (210,211) as depicted in Fig.2, right hand side.

In certain cases screens (290) are physically grouped together. Multiple screens are then preferably mechanically integrated into a single physical housing (340). An example is illustrated in Fig.3. One of the reasons to integrate multiple screens is that an active area of certain dimensions needs to be achieved and that these particular sizes are not available on the market. By combining several screens a wider screen can be realized. On the other hand, in some applications it is required to clearly split various types of information per screen for regulation purposes (e.g. compatibility with the technical specification of interoperability relating to persons with reduced mobility - TSI PRM) or for clarity (e.g. clear split between passenger information, infotainment and advertisements).

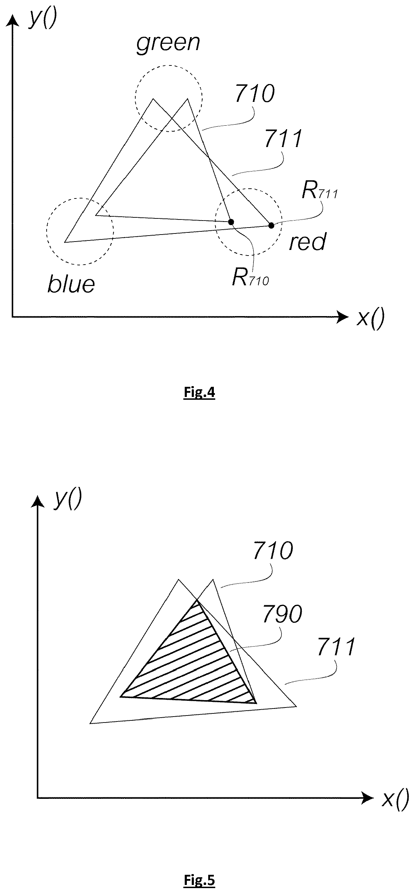

When combining a plurality of screens as in Fig.3, often panels (210, 211, 212) are combined which have different physical properties, mainly due to the difference in the applied visualization technology. Especially when combining different sizes, it is almost impossible to source the right panel sizes with identical physical specifications. When combining these different screens, the brightness and colour of these panels, when applying the same input data, deviate considerably and this is noticeable for the viewer. In Fig.4 the gamuts (710,711) of two types of panels are depicted. A gamut is the complete subset of colours which can be accurately represented by a certain device. A gamut of an RGB panel is represented by a triangle in a CIE 1931 colour space chromaticity diagram. When combining these two panels, it is obvious that a red pixel value (255, 0, 0) physically outputs a different colour on each panel (R₇₁₀ and R₇₁₁).

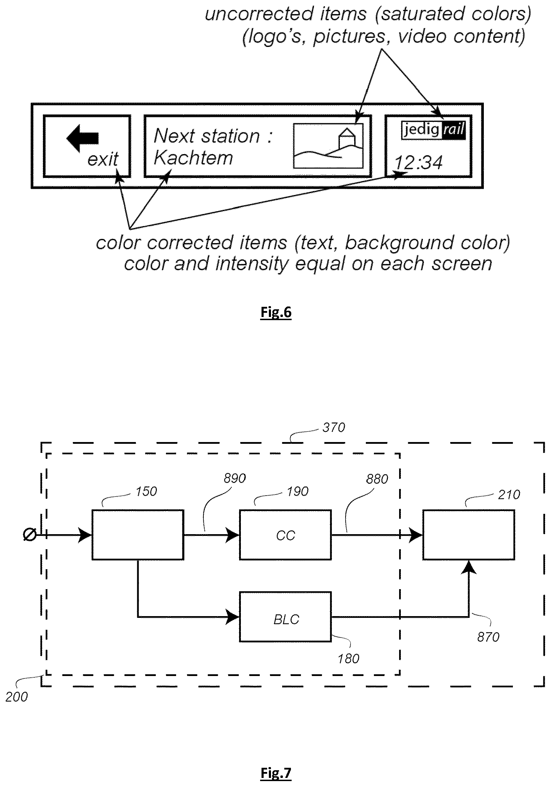

In the art solutions are known for addressing colour and intensity mismatches between panels. Basically, as illustrated in Fig.5, a reference triangle (790) or other polygon being the intersection of the different gamuts of the considered displays or part thereof is calculated and used in a colour correction (CC) algorithm module (190), shown in Fig.7. In addition, the backlight of the panels is adapted by means of a Backlight Correction (BLC) module (180) in order to match both colour and intensity for all pixel values possibly transferred to the screens.

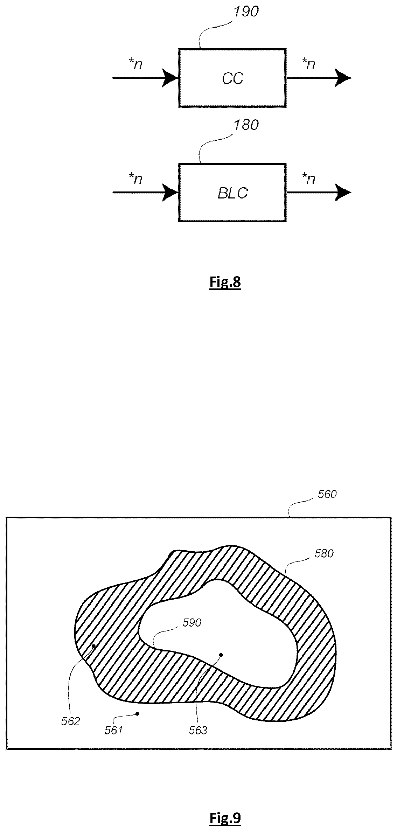

In some prior art solutions the colour correction mechanisms and backlight steering circuitry could handle a plurality of panels (see Fig.8).
WO 2014/042100 discloses a system where a plurality of display panels are integrated into one, and where colour correction is performed to minimize differences between the displays.

It is clear that displays being part of a display group which can visualize deep saturated colours, are being restricted in order to match the possibilities of the other display(s) in the group. In the example depicted in Fig.4, the display comprising the panel with gamut (711) will output its red pixel value (255,0,0) rather as orange (R₇₁₀), calculated by the colour correction algorithm, in order to meet the possibilities of the display comprising the panel with gamut (710), even though this particular screen is capable of visualizing deep saturated red (R₇₁₁). The background and uniform fonts require exactly the same physical colour output on the plurality of screens. These types of object require colour correction at all times. However, certain objects preferably require deep saturated colours, independent of other panels. Examples of these particular objects are logos, high resolution pictures, etc. This has been depicted in Fig.6.

Hence, there is a need for a solution wherein the above-mentioned problems are overcome.

### Summary of the invention

It is an object of embodiments of the present invention to provide for a system capable of providing improved image quality by properly dealing with colour and intensity mismatches between panels or on a single panel.

The above objective is accomplished by the solution according to the present invention.

The invention is defined by the appended claims.

The proposed solution indeed is capable of performing selective colour correction, and thus yields an improved image quality. The render engine receives next to the items to be displayed also information that indicates which region or regions occupied by said items need to be colour corrected. After rendering the items to be displayed the render engine processes said information which is mapped onto said objects on pixel base. This information is passed to a colour correction module along with items forming the content to be shown, where in the appropriate region(s) colour correction is performed. The resulting colour corrected items are next fed to the one or more visualisation panels. The output towards the one or more panels may also comprise items that have not passed the colour correction module.

In a preferred embodiment the render engine is arranged for receiving and processing said information for each item of said plurality separately. Advantageously the render engine is arranged for receiving and processing further information indicative of regions that do not need colour correction.

In one embodiment at least one of the items is divided in various sections by one or more closed curves that isolate a region requiring colour correction from other regions.

Preferably the render engine is arranged for appending dedicated data to be forwarded to the colour correction module in synchronisation with a video stream derived from the plurality of items, said dedicated data related to activating or deactivating the colour correction module on pixel basis.

In a preferred embodiment the dedicated data comprises per video line start and stop coordinates of the one or more regions. The start and stop coordinates are encoded within one pixel.

In another embodiment the rendering system is arranged for forwarding this dedicated data from the render engine to the colour correction module via a communication channel.

In a preferred embodiment the rendering system comprises a delay path in parallel with the colour correction module for delaying pixels of a line of pixel data corresponding to an item of the plurality, buffering means for storing the line of pixel data and multiplexing means for taking output from the colour correction module or from the delay path.

The multiplexing means is then preferably arranged for receiving a trigger signal derived from a pixel counter and a parser block adapted for switching between colour corrected and uncorrected pixel streams.

In another embodiment the rendering system comprises a backlight correction module arranged for receiving input from the render engine, for performing backlight correction and for generating output towards the display.

In one aspect the invention also relates to a display comprising a rendering system and further comprising at least one visualisation panel.

In another aspect the invention relates to a content management system for a passenger information system, arranged for outputting a plurality of items forming content to be displayed on a visualisation panel of a passenger information system and for adding to the outputted plurality of items information indicative of one or more regions occupied by the items that require colour correction.

The invention also relates to passenger information system comprising a rendering system as described and a content management system as described, said content management system and said rendering system arranged for cooperating with each other.

In another aspect the invention relates to a method for optimizing the image quality of content being displayed on one or more panels of a passenger information system. The method comprises
- adding to a plurality of items forming the content to be displayed on the panel information indicative of one or more regions occupied by said items that require colour correction,
- receiving the plurality of items and the information in a rendering system of the passenger information system,
- performing in the rendering system colour correction in the one or more regions exploiting said information and generating output towards the panel, said output comprising colour corrected items.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.
Fig.1 illustrates a conventional system for displaying visual content as applied in passenger information systems.
Fig.2 illustrates a render engine together with a video panel.
Fig.3 illustrates a display group.
Fig.4 illustrates the gamuts of two panels applied in a display group.
Fig.5 illustrates a reference gamut as input for the colour correction mechanism.
Fig.6 illustrates rendered information with objects which require colour correction and object which require no colour correction.
Fig.7 illustrates a general block scheme of a rendering system, with a colour correction mechanism and backlight steering circuitry as known in the prior art.
Fig.8 illustrates a colour correction mechanism and backlight steering circuitry driving multiple panels as known in the prior art.
Fig.9 illustrates different areas of an item to be visualized to which colour correction will not be applied.
Fig.10 illustrates the encoding in a video line of a start and stop coordinate of a region.
Fig.11 illustrates a detailed view on a part of the rendering system according to one embodiment of the invention.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect the above-mentioned objective is accomplished by adapting the objects and templates being prepared in the Content Management System so that they can be handled in the preferred, particular manner in the rendering system of the displays as set out below. To the objects and templates is added metadata describing per object which regions require colour correction and which regions of the object are preferably visualized without colour correction. The latter information is typically provided by a user who decides how the final output will be visualized on board the vehicle.

The rendering system according to the invention comprises a render engine to which a set of items is fed coming from a content management system. The items form the content to be displayed. The render engine receives information that indicates whether one or more regions in the image that are occupied by the items need colour correction. As the render engine renders and assembles all items received from the on board server(s) to form the final layout to be visualised on the panel, it is the render engine which generates the 'masks' on pixel base where colour correction need to applied or disabled.
The colour correction module receives from the render engine the information indicating which region(s) in the image need correction and next performs a colour correction algorithm for correcting the indicated zone(s). The plurality of items is then output towards the visualisation panel.

In an advantageous embodiment the object (560) or part thereof is divided in different sections by one or more closed curves, which isolate the areas requiring colour correction from the other areas. In Fig.9 an object (560) is depicted in which an area (562) is enclosed by two curves (580 and 590). This area will not be colour corrected when being displayed on said visualisation means. These specific areas are being referred to as masks. These masks are being defined in the Content Management System and are stored and transmitted to the vehicle together with the object at all times.

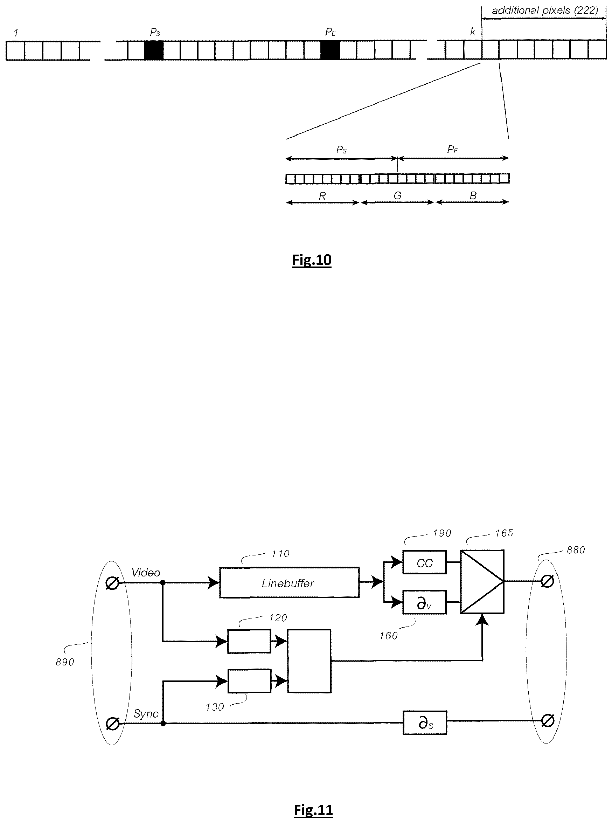

In a preferred embodiment the render engine (150) in the display (370) appends data to be transmitted to the colour correction module in sync with the video output stream (890) in order to allow the colour correction module to activate or deactivate the colour correction on pixel base. The render engine (150) then preferably appends pixels to the output video stream (890) which encode per video line the start and stop coordinates of the areas which need to be treated differently. These pixels (222) are not being visualised on the panel. Fig.10 provides an illustration. In the illustration the addressed panel has a resolution of k pixels width.

In a specific embodiment the start and stop coordinates of (a) certain area(s) can be encoded within one pixel in a 24 bit colour system (e.g. 12 MSBs = start P_{S}, 12 LSB = end P_{E}).

The invention also relates to the mechanisms added to the display circuitry which is being depicted in Fig.11. Fig.11 illustrates a part of the rendering system (200). The input of the circuit receives the video data stream and synchronization signalling, which together form the signal (890) output by the render engine. A line buffer (110) holds one line of pixel data. The additional pixels (222) are being parsed in a parser block (120). The parser block (120) drives, together with a horizontal pixel counter (130), a multiplexer (165), which makes the selection between colour corrected data output by the colour correction module (190) or the data as received from the source (150) (to which no colour correction is applied) to which a delay (160) is applied in order to accommodate for the delay introduced by the colour correction algorithm (190).

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Rendering system (200) for rendering content on a plurality of panels (210,211) integrated into one display, comprising
- a plurality of panels (210,211), **characterized by** further comprising:
- a render engine (150) arranged for receiving a plurality of items (560) to be displayed on a plurality of panels integrated into one and arranged for receiving and processing information indicative of one or more regions occupied by said items and requiring colour correction to address colour mismatches between individual panels of said plurality and for receiving and processing further information indicative of regions occupied by said items and for which colour correction to address colour mismatches between individual panels of said plurality is to be disabled,
- a colour correction module (190) arranged
* for receiving input from said render engine, said input comprising at least a part of said plurality of items and comprising processed information indicative of said one or more regions occupied by said items and requiring said colour correction and of said regions occupied by said items and for which said colour correction is to be disabled,
* for performing said colour correction in said one or more regions requiring said colour correction and
* for generating output towards said plurality of panels integrated into one, said output comprising colour corrected items.

2. Rendering system as in claim 1, wherein said render engine is arranged for receiving and processing said information for each item of said plurality separately.

3. Rendering system as in any of the previous claims, wherein at least one of said items is divided in various sections by one or more closed curves that isolate a region requiring said colour correction from other regions.

4. Rendering system as in any of the previous claims, wherein said render engine (150) is arranged for appending dedicated data to be forwarded to said colour correction module in synchronisation with a video stream derived from said plurality of items, said dedicated data related to activating or deactivating said colour correction module on pixel basis.

5. Rendering system as in claim 4, wherein said dedicated data comprises per video line start and stop coordinates of said one or more regions.

6. Rendering system as in claim 5, wherein said start and stop coordinates are encoded within one pixel.

7. Rendering system as in claim 5 or 6, comprising a communication channel between said render engine (150) and said colour correction module (190) for transferring said coordinates.

8. Rendering system as in any of the previous claims, comprising a delay path (160) in parallel with said colour correction module for delaying pixels of a line of pixel data corresponding to an item of said plurality, buffering means (110) for storing said line of pixel data and multiplexing means (165) for taking output from said colour correction module or from said delay path.

9. Rendering system as in claim 8, wherein said multiplexing means (165) is arranged for receiving a trigger signal derived from a pixel counter (130) and a parser block (120) adapted for switching between colour corrected and uncorrected pixel streams.

10. Rendering system as in any of the previous claims, comprising a backlight correction module (180) arranged for receiving input from said render engine, for performing backlight correction and for generating output towards said display.

11. Display (370) comprising a rendering system as in any of the previous claims.

12. Passenger information system comprising a rendering system as in any of claims 1 to 10 and a content management system arranged for cooperating with said rendering system, wherein said content management system is arranged for outputting a plurality of items (560) to be displayed on said plurality of panels of the passenger information system and for adding to the outputted plurality of items information indicative of one or more regions occupied by said items that require said colour correction.

13. Method for optimizing the image quality of content being displayed on a plurality of panels of a passenger information system, said plurality of panels being integrated into one display, the method being **characterized by** comprising the steps of
- adding to a plurality of items (560) to be displayed on said plurality of panels (210) integrated into one display, information indicative of one or more regions occupied by said items that require colour correction to address colour mismatches between individual panels of said plurality and further information indicative of regions occupied by said items and for which colour correction to address colour mismatches between individual panels of said plurality is to be disabled,
- receiving said plurality of items and said information and said further information in a rendering system (200) of said passenger information system,
- performing in said rendering system (200) said colour correction in said one or more regions requiring said colour correction exploiting said information and generating output towards said plurality of panels (210), said output comprising colour corrected items.

## Patentansprüche

1. Wiedergabesystem (200) zur Wiedergabe von Inhalt auf einer Vielzahl von Konsolen (210, 211), die in eine Anzeige integriert sind, umfassend
- eine Vielzahl von Konsolen (210, 211), **dadurch gekennzeichnet, dass** es weiter umfasst:
- eine Wiedergabemaschine (150), die eingerichtet ist zum Empfangen einer Vielzahl von Objekten (560), die auf einer Vielzahl von Konsolen, die in Eine integriert sind, anzuzeigen sind, und die eingerichtet ist zum Empfangen und Verarbeiten von Informationen, die bezeichnend sind für einen oder mehrere Bereiche, die von den Objekten belegt sind und eine Farbkorrektur erfordern, um auf Farbunterschiede zwischen einzelnen Konsolen aus der Vielzahl einzugehen, und zum Empfangen und Verarbeiten weiterer Informationen, die bezeichnend sind für Bereiche, die von den Objekten belegt sind und für die eine Farbkorrektur zum Eingehen auf Farbunterschiede zwischen einzelnen Konsolen aus der Vielzahl zu deaktivieren ist,
- ein Farbkorrekturmodul (190), das eingerichtet ist
* zum Empfangen einer Eingabe von der Wiedergabemaschine, wobei die Eingabe mindestens einen Teil der Vielzahl von Objekten umfasst und verarbeitete Informationen umfasst, die für den einen oder die mehreren Bereiche bezeichnend sind, die von den Objekten belegt sind und für die die Farbkorrektur zu deaktivieren ist,
* zum Durchführen der Farbkorrektur in dem einen oder den mehreren Bereichen, die die Farbkorrektur erfordern, und
* zum Erzeugen einer Ausgabe an die Vielzahl von Konsolen, die in Eine integriert sind, wobei die Ausgabe farbkorrigierte Objekte umfasst.

2. Wiedergabesystem nach Anspruch 1, wobei die Wiedergabemaschine eingerichtet ist zum getrennten Empfangen und Verarbeiten der Informationen für jedes Objekt aus der Vielzahl.

3. Wiedergabesystem nach einem der vorhergehenden Ansprüche, wobei mindestens eines der Objekte in verschiedene Abschnitte durch eine oder mehrere geschlossene Kurven geteilt wird, die einen Bereich, der die Farbkorrektur erfordert, von anderen Bereichen isolieren.

4. Wiedergabesystem nach einem der vorhergehenden Ansprüche, wobei die Wiedergabemaschine (150) eingerichtet ist zum Anhängen dedizierter Daten, die an das Farbkorrekturmodul in Synchronisation mit einem Video-Stream weiterzuleiten sind, der von der Vielzahl von Objekten abgeleitet wird, wobei die dedizierten Daten die Aktivierung oder Deaktivierung des Farbkorrekturmoduls auf Pixelbasis betreffen.

5. Wiedergabesystem nach Anspruch 4, wobei die dedizierten Daten pro Videozeile Start- und Stoppkoordinaten des einen oder der mehreren Bereiche umfassen.

6. Wiedergabesystem nach Anspruch 5, wobei die Start- und Stoppkoordinaten innerhalb eines Pixels codiert sind.

7. Wiedergabesystem nach Anspruch 5 oder 6, umfassend einen Kommunikationskanal zwischen der Wiedergabemaschine (150) und dem Farbkorrekturmodul (190) zum Übertragen der Koordinaten.

8. Wiedergabesystem nach einem der vorhergehenden Ansprüche, umfassend einen Verzögerungspfad (160) parallel zum Farbkorrekturmodul für die Verzögerung von Pixeln einer Pixeldatenzeile entsprechend einem Objekt aus der Vielzahl, Puffermittel (110) zum Speichern der Pixeldatenzeile und Multiplexmittel (165) zum Übernehmen einer Ausgabe aus dem Farbkorrekturmodul oder dem Verzögerungspfad.

9. Wiedergabesystem nach Anspruch 8, wobei die Multiplexmittel (165) eingerichtet sind zum Empfangen eines Auslösesignals, das von einem Pixelzähler (130) und einem Parser-Block (120) abgeleitet wird, angepasst zum Umschalten zwischen farbkorrigierten und nichtkorrigierten Pixel-Streams.

10. Wiedergabesystem nach einem der vorhergehenden Ansprüche, umfassend ein Hintergrundbeleuchtungskorrekturmodul (180), das eingerichtet ist zum Empfangen einer Eingabe von der Wiedergabemaschine zur Durchführung einer Hintergrundbeleuchtungskorrektur und zum Erzeugen einer Ausgabe an die Anzeige.

11. Anzeige (370), umfassend ein Wiedergabesystem nach einem der vorhergehenden Ansprüche.

12. Passagier-Informationssystem, umfassend ein Wiedergabesystem nach einem der Ansprüche 1 bis 10 und ein Inhaltsverwaltungssystem, das zum Zusammenarbeiten mit dem Wiedergabesystem eingerichtet ist, wobei das Inhaltsverwaltungssystem eingerichtet ist zum Ausgeben einer Vielzahl von Objekten (560), die auf der Vielzahl von Konsolen des Passagier-Informationssystems anzuzeigen sind, und zum Hinzufügen von Informationen, die bezeichnend sind für einen oder mehrere Bereiche, die von den Objekten belegt sind, die die Farbkorrektur erfordern, zu der ausgegebenen Vielzahl von Objekten.

13. Verfahren zur Optimierung der Bildqualität von Inhalt, der auf einer Vielzahl von Konsolen eines Passagier-Informationssystems angezeigt wird, wobei die Vielzahl von Konsolen in eine Anzeige integriert ist,
wobei das Verfahren **dadurch gekennzeichnet ist, dass** es folgende Schritte umfasst:
- Hinzufügen, zu einer Vielzahl von Objekten (560), die auf der Vielzahl von Konsolen (210) anzuzeigen sind, die in eine Anzeige integriert sind, von Informationen, die bezeichnend sind für einen oder mehrere Bereiche, die von den Objekten belegt sind, die eine Farbkorrektur erfordern, um auf Farbunterschiede zwischen einzelnen Konsolen aus der Vielzahl einzugehen, und weiteren Informationen, die bezeichnend sind für Bereiche, die von den Objekten belegt sind und für die eine Farbkorrektur zum Eingehen auf Farbunterschiede zwischen einzelnen Konsolen aus der Vielzahl zu deaktivieren ist,
- Empfangen der Vielzahl von Objekten und der Informationen und der weiteren Informationen in einem Wiedergabesystem (200) des Passagier-Informationssystems,
- Durchführen, in dem Wiedergabesystem (200), der Farbkorrektur in dem einen oder den mehreren Bereichen, die die Farbkorrektur erfordern,
- Verwerten der Informationen und Erzeugen einer Ausgabe an die Vielzahl von Konsolen (210), wobei die Ausgabe die farbkorrigierten Objekte umfasst.

## Revendications

1. Système de rendu (200) pour rendre un contenu sur une pluralité de panneaux (210, 211) intégrée dans un afficheur, comprenant :
- une pluralité de panneaux (210, 211),
**caractérisé en ce qu'**il comprend en outre :
- un moteur de rendu (150) agencé pour recevoir une pluralité d'éléments (560) à afficher sur une pluralité de panneaux intégrés en un seul et agencé pour recevoir et traiter des informations indicatives d'une ou de plusieurs régions occupées par lesdits éléments et requérant une correction de couleur pour corriger des discordances de couleur entre des panneaux individuels de ladite pluralité et pour recevoir et traiter des informations supplémentaires indicatives de régions occupées par lesdits éléments et pour lesquelles une correction de couleur pour corriger des discordances de couleur entre des panneaux individuels de ladite pluralité doit être invalidée,
- un module de correction de couleur (190) agencé
* pour recevoir une entrée provenant dudit moteur de rendu, ladite entrée comprenant au moins une partie de ladite pluralité d'éléments et comprenant des informations traitées indicatives desdites une ou plusieurs régions occupées par lesdits éléments et requérant ladite correction de couleur et desdites régions occupées par lesdits éléments et pour lesquelles ladite correction de couleur doit être invalidée,
* pour réaliser ladite correction de couleur dans lesdites une ou plusieurs régions requérant ladite correction de couleur et
* pour générer une sortie vers ladite pluralité de panneaux intégrés en un seul, ladite sortie comprenant des éléments à couleur corrigée.

2. Système de rendu selon la revendication 1, dans lequel ledit moteur de rendu est agencé pour recevoir et traiter séparément lesdites informations pour chaque élément de ladite pluralité.

3. Système de rendu selon l'une quelconque des revendications précédentes, dans lequel au moins l'un desdits éléments est divisé en diverses sections par une ou plusieurs courbes fermées qui isolent d'autres régions une région requérant ladite correction de couleur.

4. Système de rendu selon l'une quelconque des revendications précédentes, dans lequel ledit moteur de rendu (150) est agencé pour annexer des données dédiées à acheminer audit module de correction de couleur en synchronisation avec un flux vidéo dérivé de ladite pluralité d'éléments, lesdites données dédiées étant liées à l'activation ou la désactivation dudit module de correction de couleur sur une base de pixels.

5. Système de rendu selon la revendication 4, dans lequel lesdites données dédiées comprennent des coordonnées arythmiques par canal vidéo desdites une ou plusieurs régions.

6. Système de rendu selon la revendication 5, dans lequel lesdites coordonnées arythmiques sont codées au sein d'un pixel.

7. Système de rendu selon la revendication 5 ou 6, comprenant un canal de communication entre ledit moteur de rendu (150) et ledit module de correction de couleur (190) pour transférer lesdites coordonnées.

8. Système de rendu selon l'une quelconque des revendications précédentes, comprenant un trajet de retard (160) en parallèle audit module de correction de couleur pour retarder des pixels d'une ligne de données de pixel correspondant à un élément de ladite pluralité, un moyen de mise en mémoire tampon (110) pour stocker ladite ligne de données de pixel et un moyen de multiplexage (165) pour prendre une sortie dudit module de correction de couleur ou dudit trajet de retard.

9. Système de rendu selon la revendication 8, dans lequel ledit moyen de multiplexage (165) est agencé pour recevoir un signal de déclenchement dérivé d'un compteur de pixels (130) et d'un bloc d'analyseur syntaxique (120) adapté pour passer entre des flux de pixels à couleur corrigée et non corrigée.

10. Système de rendu selon l'une quelconque des revendications précédentes, comprenant un module de correction de rétroéclairage (180) agencé pour recevoir une entrée provenant dudit moteur de rendu, pour réaliser une correction de rétroéclairage et pour générer une sortie vers ledit afficheur.

11. Afficheur (370) comprenant un système de rendu tel que dans l'une quelconque des revendications précédentes.

12. Système d'informations de passagers comprenant un système de rendu tel que dans l'une quelconque des revendications 1 à 10 et un système de gestion de contenu agencé pour coopérer avec ledit système de rendu, dans lequel ledit système de gestion de contenu est agencé pour fournir en sortie une pluralité d'éléments (560) à afficher sur ladite pluralité de panneaux du système d'informations de passagers et pour ajouter à la pluralité d'éléments fournie en sortie des informations indicatives d'une ou de plusieurs régions occupées par lesdits éléments qui requièrent ladite correction de couleur.

13. Procédé d'optimisation de la qualité d'image de contenu affiché sur une pluralité de panneaux d'un système d'informations de passagers, ladite pluralité de panneaux étant intégrée dans un afficheur,
le procédé étant **caractérisé en ce qu'**il comprend les étapes de
- ajout à une pluralité d'éléments (560) à afficher sur ladite pluralité de panneaux (210) intégrée dans un afficheur d'informations indicatives d'une ou de plusieurs régions occupées par lesdits éléments qui requièrent une correction de couleur pour corriger des discordances de couleur entre des panneaux individuels de ladite pluralité et d'informations supplémentaires indicatives de régions occupées par lesdits éléments et pour lesquelles une correction de couleur pour corriger des discordances de couleur entre des panneaux individuels de ladite pluralité doit être invalidée,
- réception de ladite pluralité d'éléments et desdites informations et desdites informations supplémentaires dans un système de rendu (200) dudit système d'informations de passagers,
- réalisation dans ledit système de rendu (200) de ladite correction de couleur dans lesdites une ou plusieurs régions requérant ladite correction de couleur
en exploitant lesdites informations et génération d'une sortie vers ladite pluralité de panneaux (210), ladite sortie comprenant des éléments à couleur corrigée.
